# EUROPÄISCHE PATENTANMELDUNG

(11) **EP 4 560 386 A1**
(43) Veröffentlichungstag der Anmeldung: **28.05.2025**
(21) Anmeldenummer: 24198828.6
(22) Anmeldetag: 06.09.2024
(51) Int. Cl.: G02C 13/00, G02C 1/02

(54) **RANDLOSBRILLENFASSUNG**

(30) Priorität: 21.11.2023 DE 102023132372
(71) Anmelder: Temming Holding GmbH, 33334 Gütersloh (DE)
(72) Erfinder: Temming, Markus, 33615 Bielefeld (DE)
(74) Vertreter: Konrad, Stephan

(57) **Zusammenfassung**

Es wird eine Randlosbrillenfassung aus Brillengläsern (1; 21; 22), seitlichen Brillenbacken (3) und einem mittigen Nasensteg (4) mit gemeinsamen Durchgangsausnehmungen für gegenseitige Befestigungselemente zur Verfügung gestellt, die sich nicht ungewollt zerlegen kann, die sehr leicht, klein und stabil ausgebildet ist, sodass sie einen Brillenträger nicht in seinem Blickfeld einengt, eine sehr hohe Widerstandsfähigkeit gegen mechanische Einflüsse aufweist und mit einfachsten Werkzeugen ohne Spezialwerkzeuge montierbar ist, was dadurch erzielt wird, dass die Durchgangsausnehmungen in den Brillengläsern (1; 21; 22) aus Langlöchern (2) mit parallelen Seitenwänden (5) und die der Brillenbacken (3) und des Nasensteges (4) aus rechteckigen Ausnehmungen (8) bestehen und die Befestigungselemente aus von einer Seite in die Ausnehmungen (8) eingesetzten Verschlussklammern (6) und von der entgegengesetzten Seite eingesetzten Verschlussdornen (7) gebildet werden, die alle aus Titanblech, aus Blech einer Titanlegierung oder aus Stahl ausgebildet sind, welches jeweils eine Dicke aufweist, die dem Maß der Abstände der Seitenwände (5) des Langloches (2) und der Breite der Ausnehmungen (8) entspricht.

## Beschreibung

Die Erfindung betrifft eine Randlosbrillenfassung aus Brillengläsern, seitlichen Brillenbacken und einem mittigen Nasensteg mit Durchgangsausnehmungen für gegenseitige Befestigungselemente gemäß dem Oberbegriff des ersten Patentanspruches.

Es ist eine Linsenverbindungsstruktur für randlose Brillen bekannt, DE 694 12 996 T2, die kreisrunde Durchgangsausnehmungen in den Brillengläsern aufweist, ebenso wie die Brillenbacken und die Nasenstege mit solchen kreiszylindrischen Ausnehmungen versehen sind, die mittels einer gemeinsamen Schrauben-Muttern-Verbindung miteinander verbunden sind. Nachteilig an dieser vorbekannten Linsenverbindungsstruktur ist insbesondere, daß die Schraubenverbindungen sich nicht nur gewollt, sondern auch ungewollt lösen können, sodaß immer die Gefahr besteht, daß sich die gegenseitigen Bauteile gegeneinander verdrehen können oder daß sogar ein Bauteil verloren gehen kann. Des Weiteren erfordert diese Bauart weitere Ausnehmungen in den Brillengläsern, um dort mechanische Verdrehsicherungen abzustützen, ebenso wie verhältnismäßig große Schrauben und Muttern nebst Unterlegscheiben erforderlich sind, die sich störend im Gesichtsfeld eines Brillenträgers bemerkbar machen können.

Aufgabe der Erfindung ist es, eine Randlosbrillenfassung zur Verfügung zu stellen, die sich nicht ungewollt zerlegen kann, die sehr leicht und klein und dabei sehr stabil ausgebildet ist, sodaß sie zum einen einen Brillenträger nur minimal bis gar nicht in seinem Blickfeld einengt und zum anderen eine sehr hohe Stabilität und Widerstandsfähigkeit gegen mechanische Einflüsse aufweist. Des Weiteren soll sie mit einfachsten Werkzeugen ohne die Zuhilfenahme von Spezialwerkzeugen präzise montierbar sein.

Die Lösung dieser Aufgabe ergibt sich in Verbindung mit den Merkmalen des Oberbegriffes erfindungsgemäß zusammen mit den kennzeichnenden Merkmalen des ersten Patentanspruches dadurch, daß die Durchgangsausnehmungen in den Brillengläsern aus Langlöchern mit parallelen Seitenwänden und die Durchgangsausnehmungen der Brillenbacken und des Nasensteges aus rechteckigen Ausnehmungen bestehen und daß die Befestigungselemente aus von einer Seite in die Ausnehmungen eingesetzten Verschlußklammern und von der endgegengesetzten Seite eingesetzten Verschlußdornen gebildet werden, die alle aus Titanblech, aus Blech einer Titanlegierung oder aus Edelstahl ausgebildet sind, welches jeweils eine Dicke aufweist, die dem Maß der Abstände der Seitenwände des Langloches und der identischen Breite der Ausnehmungen in den Brillenbacken und dem Nasensteg entspricht und die Befestigungselemente dort gemeinsam miteinander verriegelt sind.

Besonders vorteilhaft an dieser erfinderischen Randlosbrillenfassung ist, daß zu ihrer Montage nur eine handelsübliche Flachzange nötig ist, mit der die Verschlußdorne einfach in die Verschlußklammern hineingetrieben werden können. Die Brillenbacken und die Nasenstege werden dabei ebenso zwischen diese beiden geklemmt, wie die Brillengläser und zusätzliche Unterlegscheiben, wodurch aufgrund der Materialauswahl und der Ausführungsform eine nicht mehr lösbare Verbindung geschaffen ist, die zudem aufgrund der hohen Festigkeit des Ausgangsmaterials erheblich kleiner ausgebildet werden kann als bekannte Schrauben-Muttern-Verbindungen. Die Konstruktion verhindert dabei sicher, daß sich die Bauteile der Randlosbrillenfassung über den gesamten Lebenszyklus einer Brille lockern oder auseinanderfallen können. Das gewählte Material der Verschlußklammern und des Verschlußdornes erlaubt eine sehr hohe mechanische Belastung der Fassung, die damit mechanisch quasi unzerstörbar ausgebildet ist.

Weitere vorteilhafte Ausgestaltungen des Gegenstandes der Erfindung ergeben sich mit und in Kombination aus den nachfolgenden Unteransprüchen.

Gemäß einer besonders vorteilhaften Ausführungsform der Erfindung ist die Verschlußklammer U-förmig ausgebildet und weist eine sich seitlich in Richtung des Verschlußdornes zwischen den Seitenstegen der U-förmigen Ausbildung erstreckende Aufnahmeöffnung für den Verschlußdorn auf, wobei die Seitenstege äußere Seitenflächen aufweisen, die sich etwa von der Tiefe der Ausnahmeöffnung in Richtung der Aufnahmeöffnung erstrecken und sich dabei unter einem sehr geringen Keilwinkel α verjüngen, wohingegen das Kopfstück der Verschlußklammer, als Quersteg der U-förmigen Ausgestaltung, sich von der Tiefe der Ausnahmeöffnung in die entgegengesetzt Richtung bis zum äußeren Ende der Verschlußklammer erstreckende äußere Seitenflächen aufweist, die einen dagegen ansteigenden und geringfügig größeren Keilwinkel β aufweisen, sodaß die Abmessungen des Kopfstückes zum Ende der Verschlußklammer hin größer sind als die Ausnehmungen in den Brillenbacken oder den Nasenstegen hoch sind. Hierdurch läßt sich beim gegenseitigen Fügen der Verschlußklammer und dem Verschlußdorn auch auf Grund des sehr kleinen Winkels eine sehr stabile und selbsthemmende Klemmung der Bauteile erzielen

Nach dem Einpressen des Verschlußdornes sind die beiden Seitenstege der Verschlußklammern von diesem elastisch zu einer mittleren Symmetrieachse hin nach innen vorgespannt und die Außenseiten zueinander parallel ausgerichtet, sodaß eine Verschlußklammer spielfrei in einem Langloch eines Brillenglases fixiert werden kann. Der ansteigende Keilwinkel β des Kopfstückes der Verschlußklammer sorgt für einen optimalen spielfreien Klemmsitz der Verschlußklammer in einer Brillenbacke oder einem Nasensteg, sodaß auch hier dauerhaft eine vollkommende Spielfreiheit gewährleistet ist.

Entsprechend einer vorteilhaften Variante der Erfindung ist der Keilwinkel β bei einem hochfesten Material wie Titan geringer ausgeführt als bei einem weniger hochfesten Material wie Edelstahl.

Dies ist besonders maßgeblich für die Erfindung, da eventuell bestehende Dickentoleranzen des Brillenglases, der Brillenbacken oder des Nasensteges und/ oder bei vorhandener Unterlegscheibe auch deren Dickentoleranz erfindungsgemäß von einer variablen Einpresstiefe der Verschlussklammer in der Ausnehmung der Brillenbacke oder des Nasensteges aufgefangen und ausgeglichen werden können, wobei der Verschlußdruck des Zangenwerkzeuges so lange erhöht und die Verschlußklammer unter geringfügiger gegenseitiger Verformung weiter in die Ausnehmung getrieben wird, bis auch die letzte Zahnpaarung der Rastzähne eingerastet ist.

Gemäß einer besonders bevorzugten Ausgestaltung der Erfindung ist der Verschlußdorn T-förmig ausgebildet und besitzt ein flaches Kopfstück zur Auflage auf einer Unterlegscheibe, die ebenfalls aus Titan oder einer Titanlegierung besteht. Der Verschlußdorn weist weiterhin einen mittigen Dornteil auf, der eine in seitliche Richtung der Radien des Langloches gerichtete sägezahnförmige Ausbildung mit wenigen Rast-zähnen aufweist, wobei der Dornteil einen geringfügigen Keilwinkel γ in Richtung seiner in die Aufnahmeöffnung der Verschlußklammer gerichteten Spitze aufweist, wobei der Keilwinkel γ bevorzug durch nach vorne abnehmende Zahnhöhen erzeugt ist.

Die Verschlußklammer ihrerseits weist an den Innenseiten der Seitenstege ihrer U-förmigen Ausbildung eine mit der sägezahnförmigen Ausbildung des Dornteils korrespondierende Ausbildung mit einer entsprechenden Anzahl an Rastzähnen auf, wobei durch den Keilwinklel γ ein einfaches Einführen des Dornteils des Verschlußdorns in die Aufnahmeöffnung ermöglicht wird. Nach dem Einpressen des Dornteils in die Verschlußklammer sind die Seitenstege so elastisch verformt, dass deren Außenflächen nicht mehr unter dem geringen Keilwinkel α zusammenlaufen, sondern optimalerweise parallel zueinander angeordnet sind, sodass ein fester spielfreier Sitz im Langloch eines Brillenglases gewährleistet werden kann.

Zur Montage dieser Randlosbrillenfassung müßen also nur der Verschlußdorn in die Verschlußklammer eingepreßt werden, wobei ein Brillenglas zwischen einer Brillenbacke oder einem Nasensteg und einer Unterlegscheibe geklemmt wird.

Zur Demontage der Randlosbrillenfassung ist ein Bereich zwischen dem Kopfstück des Verschlußdornes und dem Dornteil mit einem engen Querschnitt ausgestattet, der als Sollbruchstelle fungiert, sodaß zur Demontage der Randlosbrillenfassung das Kopfstück des Verschlußdornes durch ein Abdrehen mittels einer einfachen Zange vom Dornteil abgetrennt werden kann. Die Unterlegscheibe dient hierbei im Wesentlichen dem Schutz des Brillenglases vor einem Verkratzen durch das Zangenwerkzeug. Zur erneuten Montage müssen dann nur neue Verschlußklammern und neue Verschlußdorne verwendet werden.

Die Randlosbrillenfassung ist entsprechend weiterer vorteilhafter Ausgestaltungen entweder als Vorseitenverglasung oder als Rückseitenverglasung ausgebildet, sodaß einem Optiker eine Vielzahl möglicher Ausführungsformen der erfinderischen Randlosbrillenfassung zur Verfügung gestellt werden. Weiterhin lassen sich zusätzlich beliebige Schmuckelemente mit zwischen den erfinderischen Befestigungselementen anordnen.

Nachfolgend sind zwei Ausführungsbeispiele der Erfindung anhand von Zeichnungen näher beschrieben. Es zeigen:
- Fig. 1: eine räumliche Explosionsdarstellung einer Vorseitenverglasen einer Randlosbrillenfassung in Teilansicht,
- Fig. 2: eine räumliche Explosionsdarstellung einer Rückseitenverglasung einer Randlosbrillenfassung in einer Teilansicht,
- Fig. 3: eine stark vergrößerte Ansicht einer Verschlußklammer,
- Fig. 4: eine stark vergrößerte Ansicht eines Verschlußdornes,
- Fig. 5: eine Schnittdarstellung der Verschlußvorrichtung der Randlosbrillenfassung in einer stark vergrößerten Darstellung, und
- Fig. 6: eine Schnittdarstellung einer in einem Langloch eingesteckten Verschlußklammer in einer starken Vergrößerung.

Die Randlosbrillenfassung besteht aus Brillengläsern 1, seitlichen Brillenbacken 3 und einem mittigen Nasensteg 4, jeweils mit Durchgangsausnehmungen für gegenseitige Befestigungselemente, wobei die Durchgangsausnehmungen in den Brillengläsern 1 aus Langlöchern 2 mit parallelen Seitenwänden 5 und die Durchgangsausnehmungen der Brillenbacken 3 und des Nasensteges 4 aus rechteckigen Ausnehmungen 8 darin bestehen. Die in den Figuren dargestellte vertikale Anordnung der Langlöcher 2 und damit auch die der anderen beteiligten Durchgangsausnehmungen für die Befestigungselemente kann auch horizontal oder in jedem Winkelbereich dazwischen ausgeführt sein.

Die Befestigungselemente sind von beiden Seiten in die Durchgangsausnehmungen eingesetzt und zwar in Form von Verschlußklammern 6 und Verschlußdornen 7 mit zusätzlichen Unterlegscheiben 15 unter deren Kopfstücken 12, wobei die Randlosbrillenfassung mit allen ihren Bauteilen aus Titanblech, aus Blech aus einer Titanlegierung oder aus Edelstahl gefertigt ist, wobei die Verschlußdorne 7 und die Verschlußklammern 6 Dickenmaße aufweisen, die dem Maß der Abstände der Seitenwände 5 der Lang-löcher 2 und dem identischen Breitenmaß der Ausnehmungen 8 in den Brillenbacken 3 und dem Nasensteg 4 entsprechen, sodaß die Verschlußklammern 6 und die Verschlußdorne 7 dort spielfrei gegen ein Verdrehen gesichert gelagert sind.

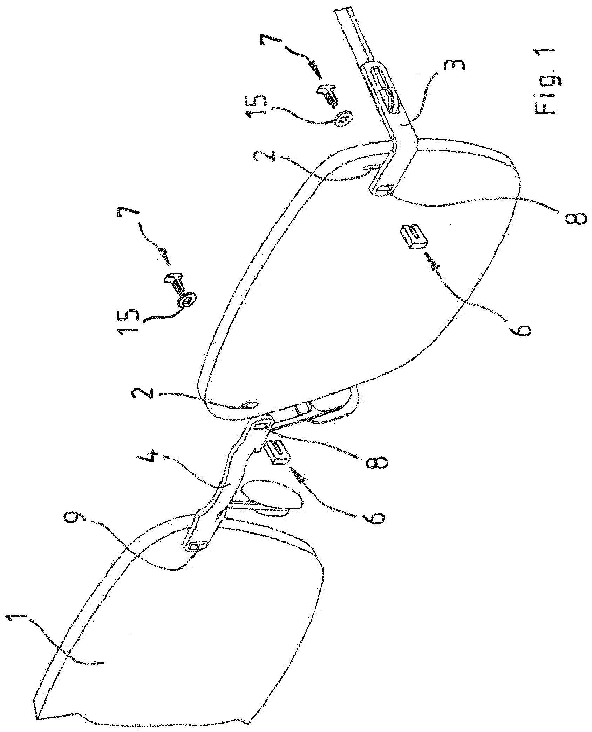

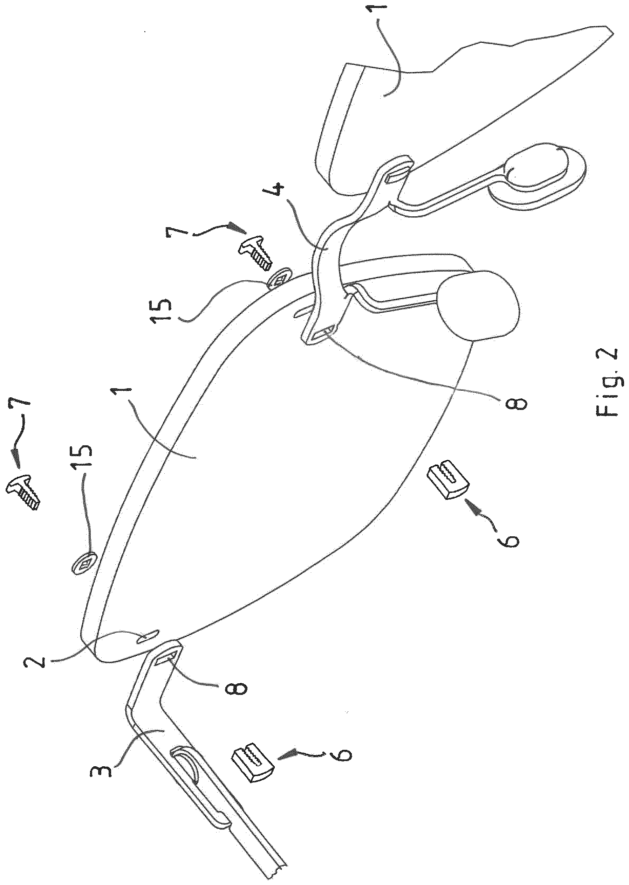

Die Brillenbacken 3 und der Nasensteg 4 der Randlosbrillenfassung können dabei entweder, wie in Fig. 1 dargestellt, bei einer Vorseitenverglasung vor den Brillengläsern 1 an diesen befestigt werden oder, wie in Fig. 2 bei einer Rückseitenverglasung dargestellt ist, von hinten hinter den Brillengläsern 1 angeordnet werden.

Die Brillenbacken 3 und die Nasenstege 4 sind dabei mit rechtwinkligen Ausnehmungen 8 versehen, durch die die Verschlußklammern 6 von außen eingebracht sind, d.h. bei einer Vorseitenverglasung von vorne und bei einer Rückseitenverglasung von hinten, wobei die Ausnehmungen 8 die Dicke der Verschlußklammern 6 aufweisen, aber eine Höhe, die über die Länge der Verschlußklammern ansteigt, wobei die Verschlußklammern 6 in Einschubrichtung U-förmig ausgebildet sind und der Zwischenraum zwischen den Seitenstegen 10 als Aufnahmeöffnung 11 für einen Verschlußdorn 7 ausgebildet ist.

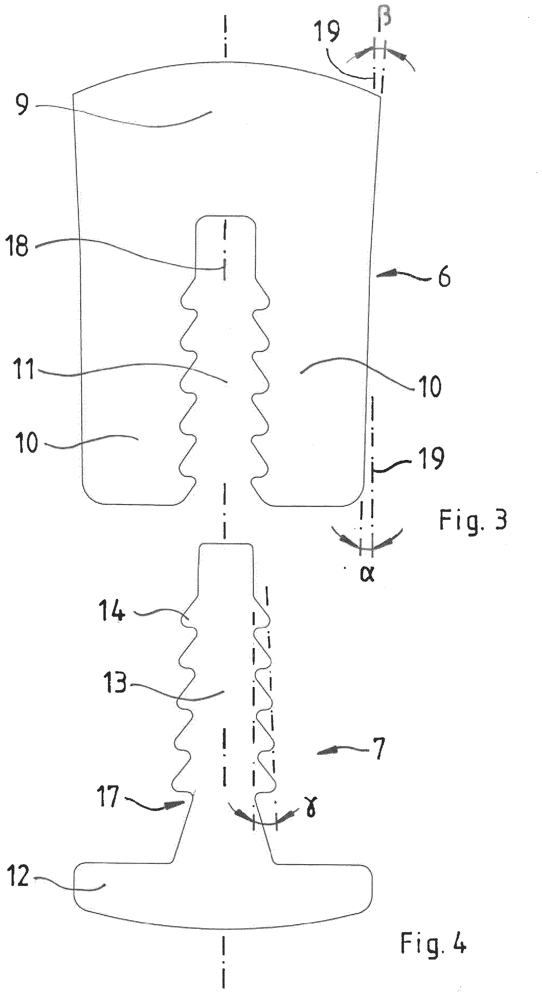

Wie in Fig. 3 dargestellt ist, weisen die beiden Seitenstege 10 der U-förmigen Ausbildung gegenüber einer Parallelen zur Mittelsenkrechten 18 durch das Bauteil einen sehr kleinen Winkel α auf, der in der Fig. 3 übertrieben dargestellt ist, ebenso wie der Winkel β in der Fig. 3 und der Winkel γ in der Fig. 4.

Die Aufnahmeöffnung 11 für den Dornteil 13 des Verschlußdornes 7 erstreckt sich etwa über 2/3 der Länge der Verschlußklammer 6, wobei das verbleibende Kopfstück 9 der Verschlußklammer beidseitig sich jeweils um einen geringeren Winkel β erweiternde Seitenfläche aufweist, sodaß das Kopfstück 9 in seinem äußeren Bereich größere Abmessungen aufweist, als die Ausnehmungen 8 hoch ist, wodurch die Verschluß-klammer 6 bei ihrer Montage mittels einer Zange dort eine feste selbsthemmende Klemmpassung erfährt.

Der Verschlußdorn 7 ist T-förmig ausgebildet und weist ein flaches Kopfstück 12 auf sowie einem mittigen Dornteil 13, der in Richtung der Radien des Langloches 2 seitlich gerichtete sägezahnförmige Ausbildungen mit wenigen Rastzähnen 14 aufweist, die in Einschubrichtung schräge Flächen und in Auszugsrichtung rechtwinklige Flächen zur Mittelsenkrechten 18 durch das Bauteil aufweisen, sodaß bei einer Montage eine geringfügige elastische Verformung der Verschlußklammer und ein gegenseitige Überspringen der Rastzähne 14 erfolgen kann aber eine Demontage des Verschlußdornes 7 auf Grund des Formschlusses in Auszugsrichtung nicht zerstörungsfrei möglich ist.

Der Dornteil 13 des Verschlußdornes 7 ist ebenfalls mit sägezahnförmigen Ausbildungen mit einer geringen Anzahl von Rastzähnen 14 ausgestattet, die der Rastenanzahl der Rastzähne 14 der Verschlußklammer 6 entspricht, wobei auch das Dornteil 13 des Verschlußdornes 7 bzw. die Kontur der Rastzähne 14 einen in Einführrichtung gerichteten, sehr geringen Einschubwinkel γ aufweisen, sodaß in einer Montageposition alle Rastzähne 14 in Rasten der Verschlußklammer 6 verrastet sind und die Außenfläche der Seitenstege 10 der Verschlußklammer 6 parallel zur Mittelsenkrechten durch die gefügten Bauteile angeordnet ist.

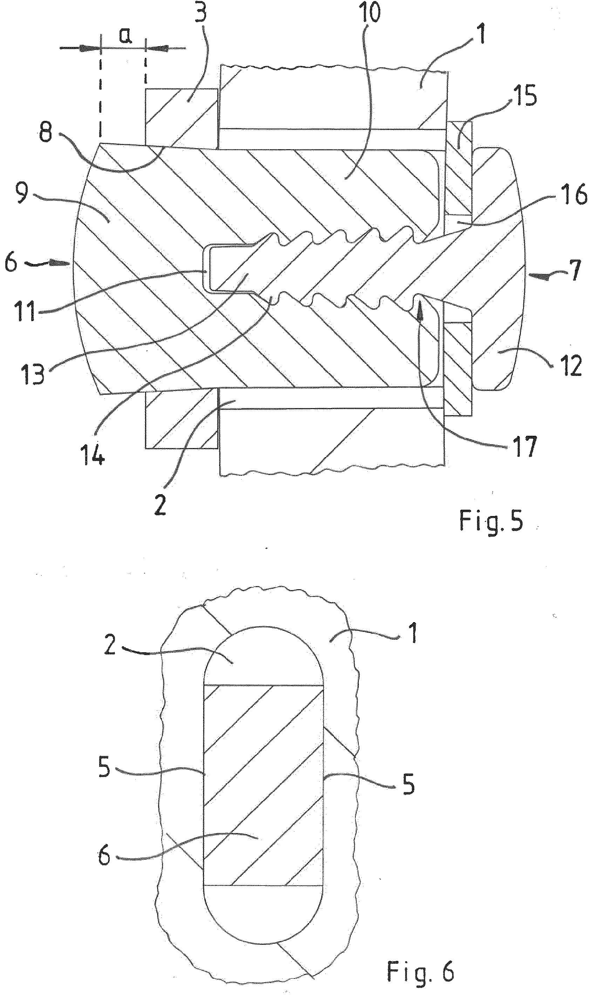

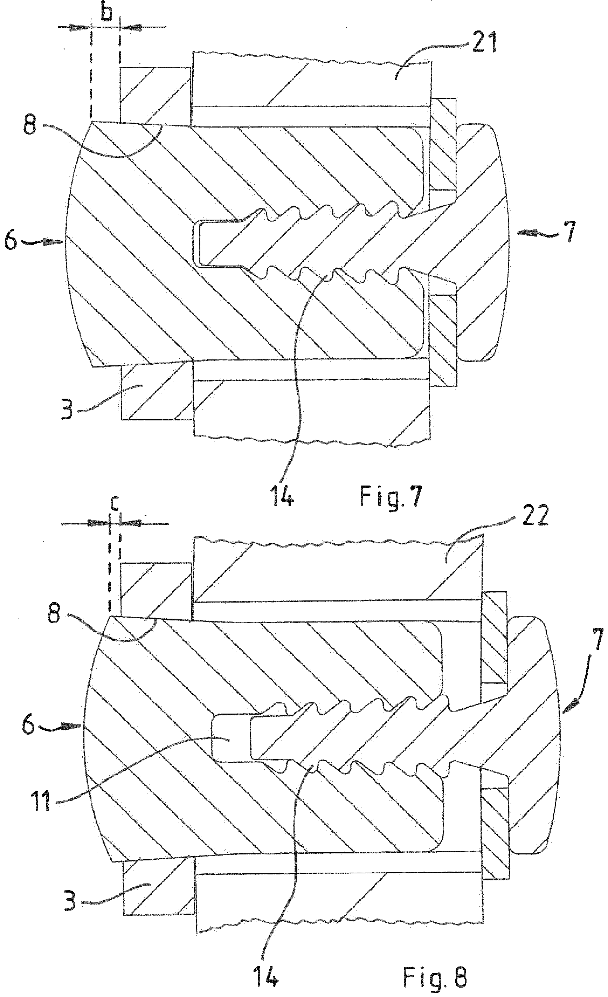

Wie in Fig. 6 gezeigt ist, liegen die Seitenflächen der Verschlußklammer 6 an den Seitenwänden 5 des Langloches 2 im Brillenglas 1 an, sodaß eine Verdrehung der Verschlußklammer 6 im Langloch 2 behindert ist und dort eine effektive Momentenabstützung bei einer seitlichen Krafteinwirkung auf eine Brillenbacke 3 oder einen Nasensteg 4 gegeben ist.

Eine Engstelle 17 hinter dem Kopfstück 12 des Verschlußdornes 7 dient als Ort einer Sollbruchstelle, die bei einer Demontage der Randlosbrillenfassung und einem Abdrehen des Kopfstückes 12 von dem Dornteil 13 mechanisch nachgibt und abgedreht werden kann.

## Patentansprüche

1. Randlosbrillenfassung aus Brillengläsern (1), seitlichen Brillenbacken (3) und einem mittigen Nasensteg (4) mit Durchgangsausnehmungen für gegenseitige Befestigungselemente, **dadurch gekennzeichnet, daß** die Durchgangsausnehmungen in den Brillengläsern (1) aus Langlöchern (2) mit parallelen Seitenwänden (5) und die Durchgangsausnehmungen der Brillenbacken (3) und des Nasensteges (4) aus rechteckigen Ausnehmungen (8) bestehen und daß die Befestigungselemente aus von einer Seite in die Ausnehmungen (8) eingesetzten Verschlußklammern (6) und von der endgegengesetzten Seite eingesetzten Verschlußdornen (7) gebildet werden, die alle aus Titanblech, aus Blech aus einer Titanlegierung oder aus Edelstahl ausgebildet sind, welches jeweils eine Dicke aufweist, die dem Maß der Abstände der Seitenwände (5) des Langloches (2) und der Breite der Ausnehmungen (8) entspricht.

2. Randlosbrillenfassung nach Anspruch 1, **dadurch gekennzeichnet, daß** die Verschlußklammer (6) U-förmig ausgebildet ist mit zwei Seitenstegen (10) und einem als Kopfstück (9) ausgebildeten Verbindungssteg und mit einer in Richtung des Verschlußdornes (7) zwischen den Seitenstegen (10) offenen Aufnahmeöffnung (11) für den Verschlußdorn (7) und daß die Verschlußklammer (8) eine Höhe aufweist, die im Bereich der Aufnahmeöffnung (11) geringer ist als das Höhenmaß der Ausnehmung (8) und im Bereich des Endes des Kopfstückes (9) größer ist als das Höhenmaß der Ausnehmung (8).

3. Randlosbrillenfassung nach Anspruch 2, **dadurch gekennzeichnet, daß** die Seitenstege (10) von der Tiefe der Aufnahmeöffnung (11) bis zu deren Öffnung hin Außenflächen mit einem sehr geringen Keilwinkel α zur Parallelen (19) der Mittelsenkrechten (18) durch die Verschlußklammer (6) auf die Mittelsenkrechte (18) zu aufweisen und daß das Kopfstück (9) von der Tiefe der Aufnahmeöffnung (11) bis zum äußeren Ende der Verschlußklammer (6) hin Außenflächen mit einem sehr gering ansteigenden Keilwinkel β zur Parallelen (19) der Mittelsenkrechten (18) durch die Verschlußklammer (6) von der Mittelsenkrechte (18) weg aufweist und das Kopfstück (9) zu seinem Ende hin höher ist, als die Ausnehmung (8) in den Brillenbacken (3) und/ oder dem Nasensteg (4) hoch ist.

4. Randlosbrillenfassung nach Anspruche 3, **dadurch gekennzeichnet, daß** der Keilwinkel β bei einem hochfesten Material wie Titan geringer ausgeführt ist als bei einem weniger hochfestem Material wie Edelstahl.

5. Randlosbrillenfassung nach Anspruche 3, **dadurch gekennzeichnet, daß** bestehende Dickentoleranzen des Brillenglases (1), der Brillenbacke (3) oder des Nasensteges (4) und/ oder bei vorhandener Unterlegscheibe (15) von einer variablen Einpresstiefe der Verschlussklammer (6) in der Ausnehmung (8) der Brillenbacke (3) oder des Nasensteges (4) ausgeglichen sind.

6. Randlosbrillenfassung nach einem der vorgenannten Ansprüche 2 oder 5, **dadurch gekennzeichnet, daß** der Verschlußdorn (7) T-förmig ausgebildet ist und ein flaches Kopfstück (12) und einen mittigen Dornteil (13) aufweist, der in Richtung von Radien des Langloches (2) seitlich gerichtete sägezahnförmige Ausbildungen mit wenigen Rastzähnen (14) aufweist und daß der Dornteil (13) einen sich in Richtung seines in die Aufnahmeöffnung (11) gerichteten Endes sehr geringfügig verjüngenden Keilwinkel γ aufweist.

7. Randlosbrillenfassung nach Anspruche 6, **dadurch gekennzeichnet, daß** der Keilwinkel γ durch sich zur Spitze des Dornteils (13) verringernde Zahnhöhen gebildet ist.

8. Randlosbrillenfassung nach Anspruch 6, **dadurch gekennzeichnet, daß** die Verschlußklammer (6) an den Innenseiten der Seitenstege (10) ihrer U-förmigen Ausbildung eine mit der sägezahnförmigen Ausbildung des Dornteils (13) korrespondierende Ausbildung mit einer der Anzahl dessen Rastzähne (14) entsprechenden Rastenanzahl aufweist.

9. Randlosbrillenfassung nach Anspruch 6 bis 8, **dadurch gekennzeichnet, daß** zwischen dem Kopfstück (12) des Verschlußdornes (7) und einem Brillenglas (1) eine Unterlegscheibe (15) aus Titanblech, aus einer Titanlegierung oder aus Edelstahl mit rechtwinkliger Ausnehmung (16) angeordnet ist.

10. Randlosbrillenfassung nach einem der vorgenannten Ansprüche 6 bis 9, **dadurch gekennzeichnet, daß** der Bereich zwischen dem Kopfstück (12) des Verschlußdornes (7) und dem Dornteil (13) mit einem engen Querschnitt als Sollbruchstelle (17) ausgebildet ist und daß das Kopfstück (12) zur Demontage der Randlosbrillenfassung durch Abdrehen vom Dornteil (13) gezielt zerstörbar ist.

11. Randlosbrillenfassung nach einem der vorgenannten Ansprüche, **dadurch gekennzeichnet, daß** die Brillenbacken (3) und/ oder der Nasensteg (4) vor oder hinter den Brillengläsern (1) anordbar sind und die Verschlußklammern (6) von den freien Seiten der Brillenbacken (3) und/ oder der Nasenstege (4) montiert sind.

12. Randlosbrillenfaßung nach einem der vorgenannten Ansprüche, **dadurch gekennzeichnet, daß** ihr Zusammenbau mittels eines Zangenwerkzeuges durchführbar ist und nach erfolgter Montage durch ein gegenseitiges Ineinanderdrücken alle Rastenzähne (14) von Verschlußklammer (6) und Verschlußdorn (7) miteinander verrastet sind, wobei die Kontur der Verschluß-klammer (6) geringfügig so elastisch verformt ist, daß die Außenflächen der Ober- und Unterseiten der Seitenstege (10) parallel zur Mittelsenkrechten durch die Verschlußklammer zueinander und im Bereich der beginnenden Radien eines Langloches (2) an deren Seitenwänden (5) anliegend ausgebildet sind.
